Europäisches Patentamt

(19) European Patent Office

Office européen des brevets

(11) Numéro de publication: **0 078 751**
**B1**

## (12) FASCICULE DE BREVET EUROPEEN

(45) Date de publication du fascicule du brevet:
09.04.86

(21) Numéro de dépôt: **82402032.5**

(22) Date de dépôt: **04.11.82**

(51) Int. Cl.⁴: **B 60 C 23/00**, G 01 L 17/00,
**B 61 F 13/00**

---

(54) Dispositif de détection de dégonflement d'un pneumatique de guidage.

---

(30) Priorité: **04.11.81 FR 8120698**

(43) Date de publication de la demande:
**11.05.83 Bulletin 83/19**

(45) Mention de la délivrance du brevet:
**09.04.86 Bulletin 86/15**

(84) Etats contractants désignés:
**DE GB IT**

(56) Documents cités:
**FR - A - 2 200 126**
**FR - A - 2 323 138**
**GB - A - 2 019 073**
**US - A - 2 108 187**
**US - A - 2 546 183**

(73) Titulaire: **MATRA, 4 rue de Presbourg, F-75116 Paris (FR)**

(72) Inventeur: **Ferbeck, Daniel, 6, rue Abbé Dhevry,
F-92130 Issy Les Moulineaux (FR)**
Inventeur: **Mimoun, Samuel, 45, rue d'Alleray,
F-75015 Paris (FR)**

(74) Mandataire: **Fort, Jacques et al, CABINET
PLASSERAUD 84, rue d'Amsterdam, F-75009 Paris (FR)**

LIBER, STOCKHOLM 1986

## Description

La présente invention a pour objet un dispositif de détection du dégonflement d'un des pneumatiques de guidage d'un véhicule sur voie, ces pneumatiques étant portés, symétriquement par rapport à l'axe de moyens de guidage fixes appartenant à la voie, par une structure support reliée au châssis du véhicule. L'invention trouve une application particulièrement importante aux véhicules guidés utilisant des roues de guidage pneumatiques horizontales reliées rigidement aux essieux et s'appuyant soit sur deux barres de guidage placées symétriquement par rapport à l'axe de la voie, soit sur une seule barre de guidage qu'elles enserrent : de tels véhicules sont par exemple utilisés dans le système VAL à Lille (France).

Il est nécessaire de détecter rapidement le dégonflement des roues de guidage de tels véhicules, tels que les véhicules de transport urbain collectif à roulement sur pneumatiques. En effet, même si des dispositifs de guidage de secours sont prévus, le roulage prolongé sur un pneu de guidage insuffisamment gonflé ou totalement dégonflé peut provoquer son éclatement, d'où un risque d'incendie ou, du moins, de perturbations importantes de l'exploitation.

On a déjà proposé divers dispositifs de détection de dégonflement. Certains utilisent un capteur porté par la roue et qui fournit un signal transmis par voie inductive à un capteur monté sur le châssis du véhicule (FR-A-1 399 657). Il s'agit là d'une disposition complexe, puisqu'elle exige la présence d'un détecteur et d'un système de transmission sur chaque roue équipée de pneumatique.

Un autre dispositif connu, prévu pour détecter uniquement le dégonflement de pneumatiques de sustentation (GB-A-2 019 073) comporte, pour chque roue ou chaque couple de roues jumelées, un disque rigide solidaire de la roue. Ce disque ferme un interrupteur si le pneumatique s'affaisse.

Là encore, il est nécessaire d'équiper chaque roue, simple ou jumelée, d'un élément relativement lourd et encombrant.

On connaît également des dispositifs de détection de dégonflement de pneumatiques de guidage qui décèlent les déformations ou les contraintes dans les barres de guidage ou dans leur support (FR-A-2 323 138). Ces dispositifs sont complexes et peu fiables et ils exigent de donner aux barres de guidage une flexibilité accrue dans la zone de détection, doù un usinage coûteux et un affaiblissement de ces barres.

La présente invention vise à fournir un dispositif de détection répondant mieux que ceux antérieurement connus aux exigences de la pratique, en particulier en ce qu'il est d'un coût faible et de fiabilité suffisante.

Dans ce but, l'invention propose un dispositif qui comprend des myens de détection du déplacement de la structure support par rapport à sa position nominale.

L'approche du problème utilisée par l'invention est totalement différente de celles antérieurement adoptées en ce sens qu'aucun composant du dispositif ne se trouve à bord de véhicules et que le dispositif, situé donc au sol, ne comporte aucun élément mobile ou flexible. Les dispositif repose sur la constatation que la probabilité de dégonflement simultané et symétrique des deux roues de guidage opposées est extrêmement faible.

En général, les moyens de détection seront portés par la voie et placés de façon à détecter le déplacement de la structure support par rapport à un composant de la voie, par exemple par rapport aux moyens de guidage eux-mêmes. Pour augmenter le déplacement de cette structure support en cas de dégonflement d'un pneu aux emplacements, répartis le long de la voie, munis de capteurs, les moyens de guidage sont prévus pour imposer aux pneumatiques une charge accrue en ces emplacements. Cette charge accrue peut être provoquée par un resserrement des barres de guidage dans la zone de détection si ces moyens de guidage comportent deux barres, par un épaississement de la barre unique si les moyens de guidage comportent une seule barre enserrée par les pneumatiques. Si les roues de guidage gauche et droite sont gonflées de façon sensiblement identique, il n'y a pas de déplacement notable de la structure support des roues de guidage au passage de la zone de resserrement ou d'épaississement. Si par contre un pneu est dégonflé, les raideurs des pneumatiques diffèrent et la structure support se déplace jusqu'à ce que les efforts horizontaux appliqués sur chacune des roues de guidage s'équilibrent.

Le déplacement de la structure support sera évidemment fonction de l'importance du resserrement ou de l'épaississement.

Ce resserrement ou cet épaississement est nécessaire du fait que, en voie courante, le déplacement sera généralement trop faible pour pouvoir être distingué de ceux résultant des débattements normaux en lacets dûs à des causes diverses. Ces causes comportent les irrégularités de la voie, les efforts de freinage, l'action du vent, la force centrifuge en courbe. On choisira le débattement de façon qu'il n'induise pas d'efforts excessifs sur les roues de guidage et leur structure support lors du fonctionnement normal. Dans la pratique, le resserrement ou l'épaississement sera choisi pour que les efforts qu'il provoque ne dépassent pas ceux rencontrés dans le courbes de la voie en exploitation normale. D'un autre côté, ce resserrement ou cet épaississement sera choisi pour provoquer un déplacement notable, typiquement de l'ordre du centimètre, en cas de dégonflement d'une roue.

La mesure du déplacement s'effectuera avantageusement sur un point de la structure support ou des organes qui lui sont liés qui est proche du plan de roulement. Si la structure support est libre en lacet, cette mesure s'effectuera sur un point éloigné de l'axe de lacet. Les moyens de détection seront en général constitués au moins par un capteur de déplacement sans contact, éventuellement associés à un circuit qui fournit un signal d'alarme uniquement lorsque le signal fourni par le capteur dépasse un seuil correspondant à un déplacement de l'ordre du centimètre. La pièce dont le débattement est détecté étant généralement métallique, on utilisera généralement des capteurs de proximité électromagnétiques de type classique.

L'invention sera mieux comprise à la lecture de la description qui suit de dispositifs qui en constituent des modes particuliers de réalisation donnés à titre d'exemples non limitatifs. La description se réfère aux dessins qui l'accompagnent, dans lesquels :

— la figure 1 est un schéma de principe montrant le montage d'un dispositif suivant l'invention pour détecter le dégonflement de pneumatiques de guidage sur un essieu simple doté de quatre roues de guidage pneumatiques et de deux galets placés dans l'axe de la voie;

— la figure 2 est une coupe schématique suivant la ligne II/II de la figure 1, montrant le montage d'une paire de capteurs des moyens de mesure;

— la figure 3, similaire à la figure 2, montre une disposition possible des capteurs des moyens de mesure dans le cas où les pneumatiques de guidage sont montés sur un boggie qui comporte des roues porteuses munies de pneumatiques et des roues métalliques doublant les roues porteuses et destinés à assurer la sécurité en cas de dégonflement.

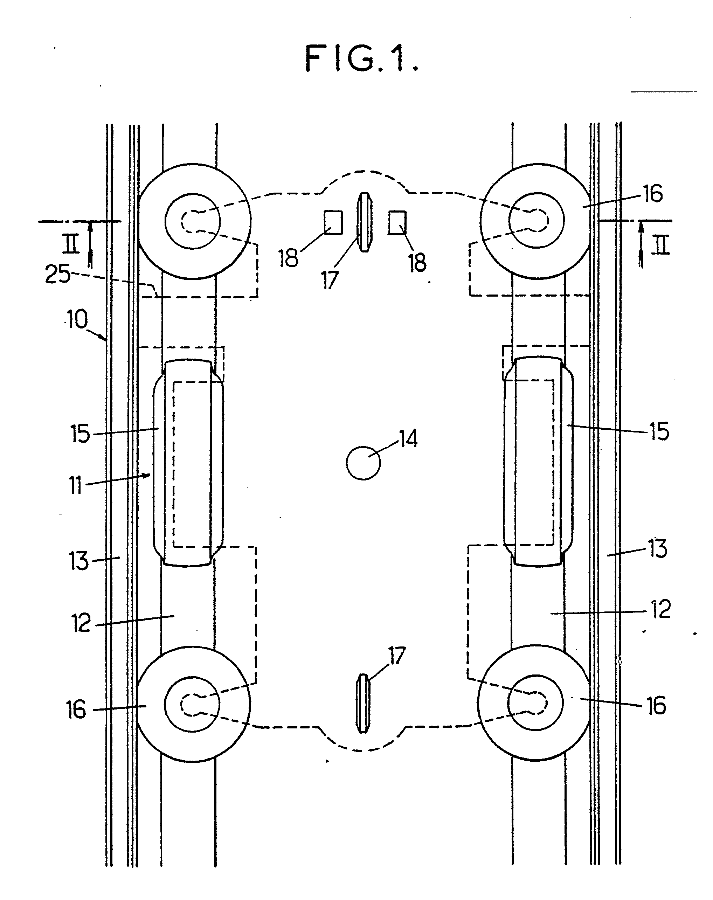

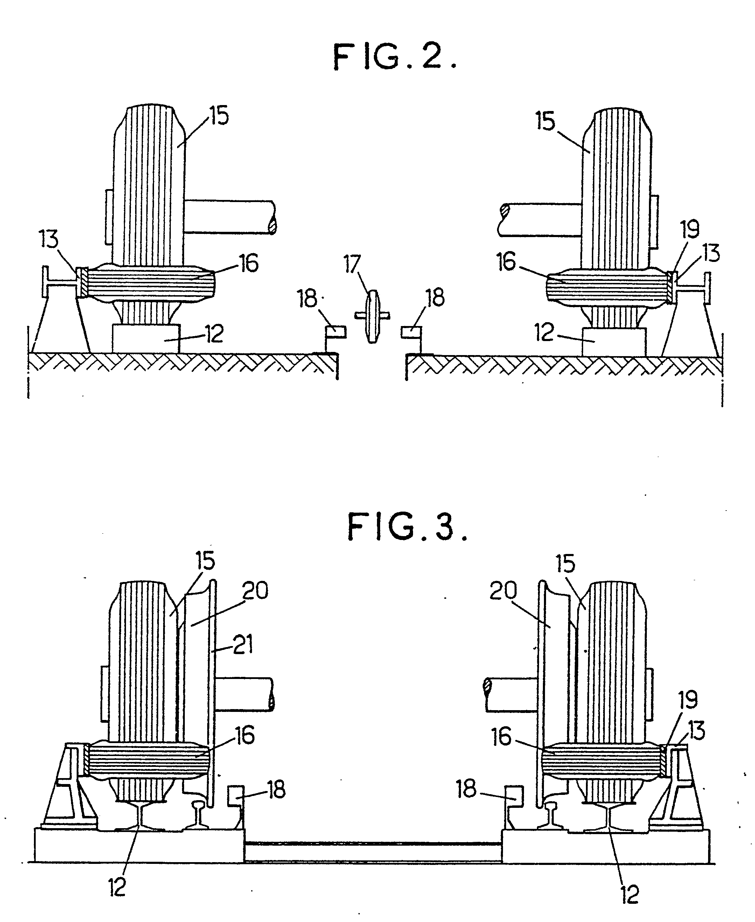

Dans le mode de réalisation montré en figures 1 et 2, le dispositif de détection équipe une voie 10 comportant deux rails porteurs 12 et deux barres de guidage 13. Le véhicule circulant sur la voie (non représenté) est équipé d'essieux simples. L'essieu 11 montré en partie sur les figures 1 et 2 est muni d'un pivot 14 (figure 1) tournant sur le châssis du véhicule. Cet essieu est muni de deux roues porteuses 15 qui s'appuient sur les rails 12. Il comporte une structure support schématisée en 15 (figure 1) en forme de plaque dont les quatre angles sont munis de roues horizontales de guidage 16 équipées de pneumatiques qui prennent appui sur les barres 13. Les roues 16 assurent le guidage en partie courante de la voie. Les moyens de guidage sont complétés par deux galets 17, reliés à la structure par des moyens rigides non représentés, destinés au guidage du véhicule dans les appareils de voies et notamment dans les aiguillages.

Les moyens de détection, qui permettent de déceler les déplacements transversaux des galets 17 provoqués par un dégonflement, comportent, en des emplacements répartis le long de la voie, des capteurs de proximité 18. Ces capteurs seront généralement du type électromagnétique, les galets 17 étant métalliques. Pour augmenter l'amplitude du déplacement provoqué par un dégonflement, les surfaces d'appui des rampes 13 sont rapprochées dans les zones où sont placés les capteurs 18. Ce rapprochement peut être réalisé en plaçant localement, sur des rampes de section constante, des tronçons métalliques plats 19 d'épaisseur appropriée ou en cintrant les barres de guidage. Les capteurs 18 sont associés à une électronique non représentée, fournissant un signal d'alarme lorsque le rapprochement dépasse un seuil déterminé qui se traduit par une amplitude présélectionnée du signal fourni par un capteur ou une différence prédéterminée entre les signaux fournis par les deux capteurs.

On peut donner, à titre d'exemple, les caractéristiques suivantes d'un dispositif destiné à un réseau métropolitain. Les deuz capteurs 18, de type électromagnétique, sont placés en regard des galets de guidage 17, à 28 mm de ces galets. Leur portée est de 25 mm. Les rampes de guidage 13 présentent une surépaisseur de 2×10 mm au niveau des capteurs, ce qui ramène l'écartement entre rampes de 2130 à 2110 mm. Lorsque tous les pneumatiques de guidage sont à la pression nominale, il n'y a pas de signal de détection.

Lorsqu'une roue de guidage est dégonflée, le déplacement de l'essieu correspondant conduit à un déplacement du galet de 10 à 20 mm environ, les galets étant situés en des points de la structure support qui sont sensiblement les plus éloignés de l'axe de rotation 14. Ce déplacement de 10 à 20 mm provoque une détection par le capteur électromagnétique disposé du côté de la roue dégonflée.

Le mode de réalisation montré en figure 3 (où les organes correspondant à ceux de la figure 2 sont désignés par le même numéro de référence) est destiné à un véhicule muni de boggies où les roues porteuses 15 munies de pneumatiques sont doublées par des roues métalliques 20 destinées à assurer la sécurité en cas de dégonflement. Les capteurs 18 sont alors placés de façon à détecter le déplacement du mentonnet 21 de ces roues métalliques. Là encore, on peut utiliser des capteurs sans contact sensibles à un déplacement de l'ordre du centimètre. Ce montage s'appliquerait aussi bien dans le cas où, au lieu de détecter le déplacement du mentonnet, on détecterait le déplacement de toute autre partie métallique du boggie.

Dans les deux cas, les capteurs peuvent être du type DB 51 CPF de la société BALOGH, montés sur des supports de mise à niveau eux-mêmes fixés à la voie. Les capteurs peuvent être placés face à face (figure 1) ou décalés dans le sens longitudinal et éventuellement doublés pour assurer une redondance. Un câble relie chaque détecteur à une boîte de raccordement vers une armoire de contrôle ; cette dernière peut comporter des moyens d'alarme et/ou de commande d'arrêt du véhicule en réponse à un signal de détection provenant de l'un quelconque des détecteurs (fonction OU) ou de plusieurs (fonction ET).

## Revendications

1. Dispositif de détection du dégonflement d'un des pneumatiques (16) de guidage d'un véhicule sur voie, pneumatiques portés, symétriquement par rapport à l'axe de moyens de guidage fixes appartenant à la voie, par une structure support reliée au châssis du véhicule, caractérisé en ce qu'il comprend des moyens (18) de détection du déplacement transversal de l'ensemble de ladite structure support à partir de sa position nominale par rapport à la voie.

2. Dispositif suivant la revendication 1, caractérisé en ce que lesdits moyens de détection (18) sont portés par la voie.

3. Dispositif suivant la revendication 2, caractérisé en ce que les moyens de détection comprennent des capteurs (18) répartis le long de la voie en des emplacements où les moyens de guidage (13, 19) imposent aux pneumatiques une charge accrue, du fait d'un resserrement des barres de guidage dans la zone de détection si ces moyens comportent deux barres, ou d'un épaississement si ces moyens comportent une seule barre.

4. Dispositif suivant la revendication 3, caractérisé en ce que l'accroissement de charge est prévu pour que les efforts appliqués soient inférieurs à ceux subis dans la courbe de rayon minimum de la voie.

5. Dispositif suivant l'une quelconque des revendications 1 à 4, caractérisé en ce que, ladite structure étant constituée par un boggie dont les roues porteuses sont constituées ou doublées par des roues métalliques (20), les moyens de détection sont placés pour détecter le déplacement du mentonnet (21) des roues métalliques provoqué par un dégonflement.

6. Dispositif suivant l'une quelconque des revendications 1 à 4, caractérisé en ce que, ladite structure étant constituée par un essieu muni de galets de guidage dans les appareils de voie, les moyens de détection (18) sont placés pour détecter les déplacements de ces galets (17) provoqués par un dégonflement.

7. Dispositif suivant l'une quelconque des revendications précédentes, caractérisé en ce que les moyens de détection (18) sont placés de façon à détecter le déplacement d'un élément de la structure proche de la voie et éloigné de l'axe de lacet de la structure si celle-ci est constituée par un moyeu ou boggie.

8. Dispositif suivant l'une quelconque des revendications précédentes, caractérisé en ce que les moyens de détection (18) comprennent des capteurs sans contact, par exemple électromagnétiques.

9. Dispositif suivant la revendication 8, caractérisé en ce que les capteurs sont associés à un circuit électronique à seuil de déclenchement.

## Claims

1. Apparatus for detecting deflation of anyone of guiding tyres (16) of a vehicle on a roadway, the tyres being carried by a support structure connected to the frame of the vehicle and symmetrically with respect to the axis of stationary guide means belonging to a track,

characterized in that it comprises means (18) for detecting lateral offset of said support structure from a set position with respect to the roadway.

2. Apparatus according to claim 1, characterized in that the sensing means (18) are carried by the roadway.

3. Apparatus according to claim 2, characterized in that the sensing means comprise sensors (18) distributed along the roadway at locations where the guide means (13, 19) impose on the tyres an increased load by a local decrease of the distance between guide bars in the detection zone if said means comprise two bars or by a thickening if said means comprise a single bar.

4. Apparatus according to claim 3, characterized in that the load increase is provided for the applied forces to be lower than those impressed in the minimum radius curve of the roadway.

5. Apparatus according to any one of claims 1–4, characterized in that, said structure consisting of a bogie whose support wheels consist of or are associated with metal wheels (20), the sensing means are so located as to detect the offset of the flange (21) of the metal wheels due to deflation.

6. Apparatus according to any one of claims 1–4, characterized in that, said structure consisting of an axial unit provided with rollers for guidance in the track mechanisms, the sensing means (18) are located for detecting offset of the rollers (17) due to deflation.

7. Apparatus according to any one of the preceding claims, characterized in that the sensing means (18) are so located as to detect offset of an element of said structure close to the roadway and remote from the yaw axis of the structure if the latter consists of an axle unit or bogie.

8. Apparatus according to any one of the preceding claims, characterized in that the sensing means (18) include contactless sensors, for instance electromagnetic sensors.

9. Apparatus according to claim 8, characterized in that the sensors are associated to a triggering threshold electronic circuit.

## Patentansprüche:

1. Vorrichtung zur Ermittlung ungenügenden Reifendrucks eines der Führungsreifen (16) eines spurgeführten Fahrzeuges, das symetrisch im Verhältnis zur Achse der festen Führungselemente, die zur Spurbahn gehören, durch einen, mit dem Chassis des Fahrzeuges verbundenen, Stützaufbau auf Reifen getragen ist, dadurch gekennzeichnet, daß sie Mittel (18) zur Ermittlung der Querverschiebung der Gesamtheit des Stützenaufbaues ausgehend von seiner Nominalposition im Verhältnis zur Spurbahn umfaßt.

2. Vorrichtung nach Anspruch 1, dadurch gekennzeichnet, daß die Ermittlungselemente (18) von der Spurbahn getragen sind.

3. Vorrichtung nach Anspruch 2, dadurch gekennzeichnet, daß die Ermittlungselemente Sensoren (18) umfassen, die an den Stellen entlang der Bahn verteilt sind, wo die Führungsmittel (13, 19) einen verstärkten Druck auf die Reifen ausüben, durch ein enges Zusammenziehen der Führungsstäbe in der Prüfzone wenn die Mittel aus zwei Stäben bestehen, oder durch eine Verdickung wenn die Mittel aus einem einzigen Stab bestehen.

4. Vorrichtung nach Anspruch 3,
dadurch gekennzeichnet,
daß das Anwachsen des Druckes vorausberechnet ist, damit die aufgebrachten Druckspannungen kleiner sind als diejenigen, die in der Bahnkrümmung mit dem geringsten Radius aufgebracht werden.

5. Vorrichtung nach einem der Ansprüche 1 bis 4,
dadurch gekennzeichnet,
daß bei dem aus einem Drehgestell gebildeten Stützaufbau, dessen Tragräder als Metallräder (20) ausgebildet oder verdoppelt, sind die Spürmittel zur Ermittlung der Verschiebung des Spurkranzes (21) der Metallräder, hervorgerufen durch ungenügenden Reifendruck, angeordnet sind.

6. Vorrichtung nach einem der Ansprüche 1 bis 4,
dadurch gekennzeichnet,
daß bei dem aus einer mit Führrollen versehenen Achse gebildeten Stützaufbau des Bahnfahrzeuges die Ermittlungselemente (18) zur Aufspürung der Verschiebungen dieser Rollen (17), hervorgerufen durch ungenügenden Reifendruck, angeordnet sind.

7. Vorrichtung nach einem der vorangehenden Ansprüche,
dadurch gekennzeichnet,
daß die Ermittlungselemente (18) zur Aufdeckung der Verschiebung eines Elementes des Aufbaus nah an der Bahn und entfernt von der Drehachse des Aufbaus, wenn dieses aus einem Mittelstück oder Drehgestell gebildet ist, angeordnet sind.

8. Vorrichtung nach einem der vorangehenden Ansprüche,
dadurch gekennzeichnet,
daß die Ermittlungselemente (18) aus kontaktlosen, beispielsweise elektromagnetischen Sensoren bestehen.

9. Vorrichtung nach Anspruch 8,
dadurch gekennzeichnet,
daß die Sensoren mit einem elektronischen Kreis mit Auslöseschwellen verbunden sind.

# FIG.1.

# FIG.2.

# FIG.3.